Europäisches Patentamt

European Patent Office

Office européen des brevets

(19)

(11) Veröffentlichungsnummer: **0 031 521**
**B1**

# (12) EUROPÄISCHE PATENTSCHRIFT

(45) Veröffentlichungstag der Patentschrift:
22.08.84

(21) Anmeldenummer: **80107806.4**

(22) Anmeldetag: **11.12.80**

(51) Int. Cl.³: **B 42 D 15/02**, B 32 B 33/00

(54) Verfahren zur Herstellung fälschungssicherer Dokumente.

(30) Priorität: 24.12.79 DE 2952322
22.07.80 DE 3027759

(43) Veröffentlichungstag der Anmeldung:
08.07.81 Patentblatt 81/27

(45) Bekanntmachung des Hinweises auf die Patenterteilung:
22.08.84 Patentblatt 84/34

(84) Benannte Vertragsstaaten:
AT BE CH DE FR GB IT LI NL SE

(56) Entgegenhaltungen:
DE - A - 2 164 386
DE - A - 2 401 996
DE - A - 2 737 406
DE - A - 2 838 691
FR - A - 2 396 359
GB - A - 1 167 519
US - A - 3 204 354
US - A - 3 716 439
US - A - 3 871 119
US - A - 3 994 764
US - A - 4 100 011

(73) Patentinhaber: **AGFA-GEVAERT Aktiengesellschaft,
D-5090 Leverkusen 1 (DE)**

(72) Erfinder: **Neuhaus, Karl-Friedrich, Dr.,
Bodelschwinghstrasse 14, D-4150 Krefeld (DE)**
Erfinder: **Rosenkranz, Hans Jürgen, Dr.,
Heinrich-Kauert-Weg 9, D-4150 Krefeld (DE)**
Erfinder: **Perrey, Hermann, Dr., Auf der Rheinaue 8,
D-4150 Krefeld 11 (DE)**

## Beschreibung

Die Erfindung betrifft ein Verfahren zur Herstellung fälschungssicherer Dokumente durch ein- oder beidseitiges Laminieren eines Informationsträgers mit Kunststoff-Folien.

Fälschungssichere Dokumente gewinnen in zunehmendem Masse an Bedeutung. Sie werden z.B. in Form von Kreditkarten von Banken, Einzelhandelsgeschäften, Ölgesellschaften, Fluglinien oder Kreditgesellschaften zur Erleichterung des bargeldlosen Zahlungsverkehrs verwendet. Solche Dokumente enthalten Informationen, die sich auf den Eigentümer wie auch auf die das Dokument ausgebende Stelle beziehen und die in beider Interesse von Fälschungen zu sichern sind. Es hat deshalb nicht an Versuchen gefehlt, Informationsträger der genannten Art fälschungssicher auszurüsten.

Beispielsweise ist bekannt, eine mit Informationen bedruckte Karte zwischen zwei Folien einzukaschieren. Die Kaschierfolie wird in diesem Falle stellenweise so präpariert, dass sie an den präparierten Stellen an der Papieroberfläche der Folie nicht haftet. Ein Versuch, die Kaschierfolie nachträglich abzuziehen, hat dann zur Folge, dass beim Erreichen der präparierten Bereiche der Abriss dem geringeren Widerstand folgend zur Papieroberfläche ausweicht und die Papieroberfläche einreisst (DE-A-2 511 367).

Nach einem anderen Vorschlag wird ein aus einer Papierkarte und einer Folienumrandung bestehender bedruckter Informationsträger, ein sogenanntes «Verbundinlett», zwischen 2 Klarsichtfolien verschweisst. Die Folienumrandung sorgt bei dieser Arbeitsweise für eine die Kanten der Papierkarte umfassende Randverschweissung, welche das Aufspalten der verschweissten Karte erschwert (DE-A-2 756 691).

Nachteilig an den bekannten Kaschierungsverfahren ist, dass sich die hierfür verwendeten Folien bei der Verschweissung nur unvollkommen mit der Papieroberfläche des Informationsträgers verbinden und damit einen nur bedingten Schutz gegen Fälschungen bieten. Auch eine Randverschweissung bedeutet unter diesen Umständen keine wesentliche Verbesserung, da sie sich mühelos entfernen und wieder erneuern lässt. Die bekannten Kaschierungsverfahren haben darüber hinaus den Nachteil, dass sich die aufkaschierte Folie von dem Papierträger durch Erwärmung oder durch chemische Mittel wieder trennen lässt.

Die Übertragung eines auf elektrophotographischem Wege erzeugten Tonerbildes von einer elektrophotographischen Platte auf eine Karte, wobei man zur Unterstützung des Pulverumdrukkes bzw. zur Befestigung des Pulverbildes auf der Karte eine Klebeschicht verwendet, wird in der DE-A-2 401 996 beschrieben. Man trägt dazu die Klebeschicht zunächst auf eine Abschälfolie auf, die als Transportmittel für das Tonerbild vorgesehen ist, überträgt dann das Tonerbild von der elektrophotographischen Platte auf die Klebeschicht und bringt schliesslich das Tonerbild mit der Klebeschicht auf die Kartenoberfläche, auf der man es durch Aushärten der Klebeschicht befestigt. Nach Abziehen der Klebefolie bleibt ein auf der Kartenoberfläche fixiertes Tonerbild zurück.

In der US-A-3 871 119 wird eine aus einem speziellen Silbersalzdiffusionsübertragungsmaterial bestehende Identifikationskarte beschrieben. Die Karte enthält eine nach dem Diffusionsverfahren hergestellte Aufzeichung und ist mittels eines thermisch aktivierbaren Polyesters mit einer Polyvinylchloridfolie beklebt. Das Diffusionsübertragungsmaterial enthält Polyvinylalkohol und Polyvinylpyridin. In der Klebstoffschicht ist neben einem als Klebemittel verwendeten gesättigten Polyester und einem hochsiedenden Lösungsmittel ein Peroxid-Promotor enthalten. Dieser mit der Klebemittelschicht zur Verfügung gestellte Poroxid-Promotor reagiert, nachdem die Polyvinylchloridfolie mit der Oberfläche des Diffusionsübertragungsmaterials in Kontakt gebracht worden ist, mit dem im Diffusionsübertragungsmaterial enthaltenen Polyvinylalkohol und dem Polyvinylpyridin, wodurch die Oberfläche des Diffusionsübertragungsmaterials für den als Klebemittel verwendeten gesättigten Polyester kontaktfähig wird. Nachdem man das Lösungsmittel durch Erhitzen des verklebten Materials auf etwa 140°C entfernt und das Material wieder abgekühlt hat, ist die Verbindung zwischen Polyvinylchloridfolie und Diffusionsübertragungsmaterial hergestellt.

Der Erfindung liegt die Aufgabe zugrunde, einen Informationsträger, z.B. in Form einer Kredit- oder Ausweiskarte, mit einem durchsichtigen Folienmaterial so zu umhüllen, dass die gesamte Oberfläche des Informationsträgers mit dem Folienmaterial unlösbar verbunden ist und die auf dem Informationsträger angebrachten Informationen ohne Zerstörung des Informationsträgers nicht mehr zugänglich und damit vor nachträglichen Änderungen verlässlich geschützt sind.

Die Aufgabe wird erfindungsgemäss durch ein Verfahren zur Herstellung fälschungssicherer Dokumente durch ein- oder beidseitiges Laminieren eines Informationsträgers mit Folien, von denen mindestens eine durchsichtig ist, gelöst, wobei das Verfahren dadurch gekennzeichnet ist, dass die Folie mit einer Haftschicht aus einer radikalisch vernetzbaren Masse versehen wird und auf eine oder beide Seiten des Informationsträgers so auflaminiert wird, dass die vernetzbare Masse mit dem Informationsträger in Kontakt kommt und dass diese Masse der Haftschicht vernetzt wird und dadurch eine nicht wieder lösbare Verbindung zwischen dem Informationsträger und der Folie herstellt.

Die Vernetzung der Haftschicht des Laminats erfolgt mittels energiereicher Strahlung, mittels durch UV-Licht aktivierbarer Initiatoren oder mittels thermisch oder durch Beschleuniger aktivierbarer Initiatoren.

Die erfindungsgemäss verwendete Haftschicht enthält als radikalisch vernetzbare Substanzen ethylenisch ungesättigte, monomere, oligomere oder polymere Verbindungen, vornehmlich α,β-ungesättigte bzw. Vinylgruppen enthaltende Verbindungen und insbesondere Verbindungen, die Acrylat- und/oder Methacrylatgruppen enthalten. Wenn im folgenden auf Acrylverbindungen verwiesen wird, so soll dieser Begriff auch Methacrylverbindungen umfassen.

Gemäss einer bevorzugten Ausführungsform werden radikalisch vernetzbare, ethylenisch ungesättigte, oligomere oder polymere Verbindungen verwendet, insbesondere solche auf der Basis von

Polyestern,
α,β-ungesättigten Polyestern,
Polyethern,
Polyepoxiden,
Polyurethanen,
urethanmodifizierten Polyepoxiden,
urethanmodifizierten Polyestern und
urethanmodifizierten Polyethern,
ungesättigten Polymeren

Als für das Verfahren der Erfindung besonders geeignete radikalisch vernetzbare Verbindung seien beispielsweise folgende genannt:

I. Umsetzungsprodukte von Polyisocyanaten mit Hydroxyalkylacrylaten und gegebenenfalls mit Polyolen, die 0,01 bis 10 Gew.%, bezogen auf das Umsetzungsprodukt, vorzugsweise 0,1 bis 5 Gew.%, organisch gebundenen Schwefel in Form von Thio- und/oder Dithiogruppen enthalten können.

Die Umsetzungsprodukte bestehen vorzugsweise aus:

A) 1 Grammäquivalent NCO eines Polyisocyanats mit mindestens 2, z.B. 2 bis 4, insbesondere 2 Isocyanatgruppen pro Molekül,
B) 0 bis 0,7 Grammäquivalenten OH eines Polyols mit mindestens 2, insbesondere 2 bis 6 OH-Gruppen pro Molekül (geeignete Polyole sind in der DT-OS 2 737 406 beschrieben),
C) 0,01 bis 1,0 Grammäquivalent OH eines Hydroxyalkylacrylats mit mindestens 2, insbesondere 2 bis 4 C-Atomen in der Alkylgruppe und
D) gegebenenfalls 0,01 bis 0,3 Grammäquivalente OH eines Thio- oder Dithio- bzw. Thio- und Dithiogruppen enthaltenden Polyols mit mindestens 2, insbesondere 2 bis 4 OH-Gruppen pro Molekül;

wobei die Summe der OH-Grammäquivalente B bis D 1 bis 1,2 ist und der Gehalt an organisch gebundenem Schwefel, herrührend aus den Thio- und Dithiogruppen 0 bis 10 Gew.%, insbesondere 0,1 bis 5 Gew.%, bezogen auf das Umsetzungsprodukt, betragen kann.

Die Umsetzungsprodukte, einschliesslich ihrer Herstellung, werden in der DE-B-1 644 797, GB-A-743 514, US-A-3 297 745 und der DE-A-2 737 406 in allen Einzelheiten beschrieben.

Die Umsetzungsprodukte können im Gemisch mit mono- und/oder polyfunktionellen Vinylmonomeren angewandt werden. Auch über diese Möglichkeit gibt die DE-A-2 737 406 Auskunft.

II. Umsetzungsprodukte von Polyepoxiden, die mehr als eine Epoxidgruppe (z.B. 2,3 Epoxipropylgruppe) pro Molekül, vorzugsweise 2 bis 6, insbesondere 2 bis 3, Epoxidgruppen enthalten, mit Acrylsäure bzw. Methacrylsäure.

Die Herstellung erfolgt nach bekannten Methoden durch Umsetzung des Polyepoxids mit (Meth)Acrylsäure oder deren Mischungen, beispielsweise bei 40 bis 100°C und gegebenenfalls in Gegenwart von etwa 0,01 bis 3 Gew.-%, bezogen auf Epoxid + Säure, an Katalysatoren, die die Umsetzung beschleunigen, wie tert. Amine, Alkalihydroxide, Alkalisalze organischer Carbonsäuren (vgl. US-A-2 456 408, 2 575 440 und 2 698 308).

Eine ausführliche Beschreibung dieser Umsetzungsprodukte wird in der DE-A-2 349 979 gegeben.

III. Urethanisierte Umsetzungsprodukte von Polyepoxiden sind z.B. in der DE-A-2 164 386 beschrieben. Beispiele für solche Verbindungen sind Vinyl- und gegebenenfalls Carboxylgruppen enthaltende Urethanharze aus Polyepoxiden, mit mehr als einer 1,2-Epoxidgruppe pro Molekül, α,β-monoolefinisch ungesättigten Carbonsäuren, Isocyanaten und gegebenenfalls cyclischen Dicarbonsäureanhydriden.

Man erhält die Urethanharze dadurch, dass das Polyepoxid zunächst mit Acryl- und/oder Methacrylsäure umgesetzt wird, so dass 60 bis 100% der vorhandenen 1,2-Epoxidgruppen in β-Hydroxyacryl- bzw. -methacrylsäureestergruppen überführt, anschliessend die entsprechenden Hydroxygruppen mit einem Isocyanat umgesetzt werden, so dass 30 bis 90% der Hydroxygruppen der β-Hydroxyacryl- bzw. β-Hydroxymethacrylsäureester in die entsprechenden Urethane überführt werden und gegebenenfalls die noch vorhandenen Hydroxygruppen mit einem cyclischen Dicarbonsäureanhydrid umgesetzt werden.

Die Verbindungen und ihre Herstellung werden im einzelnen in der DE-A-2 557 408 beschrieben.

Weitere Beispiele für urethanisierte Umsetzungsprodukte von Polyepoxiden sind solche aus 1,2-Polyepoxiden und olefinisch ungesättigten Carbonsäuren, die aus

A) einem Epoxyacrylat, erhalten durch Reaktion (1) eines Diglycidylesters einer Hexahydrophthalsäure oder (2) eines Polyglycidilethers mehrwertiger Phenole, insbesondere Bisphenol A, mit Acryl- oder Methacrylsäure oder deren Mischungen, wobei 90 bis 100% der 1,2-Epoxidgruppen mit Methacrylsäure oder Acrylsäure verestert worden sind, und
B) Hexamethylendiisocyanat, Cyclohexan-1,4-diisocyanat, 2,4- und 2,6-Toluylendiisocyanat und deren Gemische, Isophorondiisocyanat (1-Isocyanatomethyl-5-isocyanato-1,3,3-trimethyl-cyclohexan), Phorondiisocyanat (2,2,4- bzw. 2,4,4-Trimethyl-hexamethylendiisocyanat-1,6), 1,5-Naphthalindiisocyanat, 1,3-Cyclopentylendiisocyanat, m- und p-Phenylendiisocyanat, 2,4,6-Tolu-

ylentriisocyanat, 4,4',4"-Triphenylmethantriiso-cyanat, 1,3- und 1,4-Xylylendiisocyanat, 3,3'-Dimethyl-4,4'-diphenylmethandiisocyanat, 4,4'-Diphenyl-methandiisocyanat, 3,3'-Dimethylbiphen-ylendiisocyanat, 4,4'-Bisphenylendiisocyanat, Durendiisocyanat, 1-Phenoxy-2,4'-phenylendiisocyanat, 1-tert.-Butyl-2,4-phenylendiisocyanat, Methylen -bis-4,4'-cyclohexyldiisocyanat, 1-Chlor-2,4-phenylendiisocyanat oder 4,4'-Di-phenyletherdiisocyanat, wobei 2 Grammäqui-valente des Reaktionsproduktes A) mit 0,1 bis 0,9 Mol, vorzugsweise 0,5 bis 0,9 Mol Isocyanat zur Reaktion gebracht worden sind, bestehen.

Die Umsetzungsprodukte und ihre Herstellung werden im einzelnen in den DE-A-2 841 880, 2 164 386 und 2 557 408 beschrieben.

IV. Umsetzungsprodukte eines Polyepoxids mit mehr als einer Epoxidgruppe pro Molekül, dessen Epoxidgruppen zu mindestens 60%

A) mit 0,01 bis 0,6 SH-Äquivalenten, bezogen auf 1 Epoxidäquivalent, Schwefelwasserstoff, eines aliphatischen oder cycloaliphatischen, aromatischen oder araliphatischen Dithiols oder Polythiols oder eines Gemisches der vorgenannten Schwefelverbindungen und anschliessend
B) mit 0,99 bis 0,4 Carboxyl-Äquivalenten, bezogen auf 1 Epoxidäquivalent, Acryl- oder Methacrylsäure oder eines Gemisches aus Acryl- und Methacrylsäure umgesetzt worden sind.

Unter Polyepoxiden werden im vorliegenden Zusammenhang Verbindungen verstanden, die mehr als eine Epoxidgruppe (z.B. 2,3 Epoxypropylgruppe) pro Molekül, vorzugsweise 1,6 bis 6, insbesondere 1,6 bis 3 Epoxidgruppen enthalten. Weiter bedeutet ein Epoxidäquivalent die Menge einer Epoxidgruppen enthaltenden Verbindung in Gramm, die eine Epoxidgruppe enthält.
Die Umsetzungsprodukte und das Verfahren ihrer Herstellung werden in ausführlicher Weise in der DE-A-2 533 125 beschrieben.
V. Umsetzungsprodukte eines Polyepoxids mit mehr als einer Epoxidgruppe pro Molekül, dessen Epoxidgruppen zu mindestens 60%

A) mit 0,01 bis 0,5 NH-Äquivalenten, bezogen auf 1 Epoxidäquivalent, Ammoniak oder eines aliphatischen oder cycloaliphatischen primären oder sekundären Amins oder eines Gemisches der vorgenannten Stickstoffverbindungen und anschliessend
B) mit 0,99 bis 0,5 Carboxyl-Äquivalenten, bezogen auf 1 Epoxidäquivalent, Acryl- oder Methacrylsäure oder einesGemisches aus Acryl- und Methacrylsäure umgesetzt worden sind.

Unter Polyepoxiden werden im vorliegenden Fall Verbindungen verstanden, die mehr als eine Epoxidgruppe (z.B. 2,3 Epoxypropylgruppe) pro Molekül, vorzugsweise 1,6 bis 6, insbesondere 1,6 bis 3 Epoxidgruppen enthalten. Weiter bedeutet ein Epoxidäquivalent die Menge eines Epoxids in Gramm, die eine Epoxidgruppe enthält.

Bezüglich einer ins einzelne gehenden Beschreibung der Umsetzungsprodukte und ihrer Herstellung wird auf die DE-A-2 429 527 verwiesen.
Die unter IV. und V. beschriebenen modifizierten Polyepoxide können auch gemäss III. uretha-nisiert werden.
VI. Mit ethylenisch ungesättigten Gruppierun-gen veresterte Polyester und Polyether.
Beispiele hierfür sind Veresterungsprodukte hydroxylgruppenhaltiger Polyester oder Polyether mit Acryl- und/oder Methacrylsäure.
Geeignete hydroxylgruppen enthaltende Polyester und Polyether sind in der DE-A-2 607 998 beschrieben.
Beispiele für mit ethylenisch ungesättigten Gruppen veresterte Polyester finden sich in der DE-A-2 838 691.
VII. Weiterhin geeignet sind $\alpha,\beta$-ungesättigte Polyesterharze, $\alpha,\beta$-ethylenisch ungesättigte Po-lyester im Sinne der Erfindung sind die üblichen Polykondensationsprodukte mindestens einer $\alpha,\beta$-ethylenisch ungesättigten Dicarbonsäure mit in der Regel 4 oder 5 C-Atomen oder deren ester-bildenden Derivate, gegebenenfalls in Abmi-schung mit bis zu 90 Mol-%, bezogen auf die ungesättigten Säurekomponenten mindestens einer aliphatischen gesättigten mit 4-10 C-Ato-men oder einer cycloaliphatischen Dicarbonsäu-re mit 8-10 C-Atomen oder deren esterbildenden Derivate mit mindestens einer Polyhydroxyverbindung, insbesondere Dihydroxyverbindung, mit 2-8 C-Atomen – also Polyester, wie sie bei J. Björksten et al., «Polyesters and their Applications», Reinhold Publishing Corp., New York 1956, beschrieben sind.
Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure Itaconsäure oder Chlormaleinsäure. Beispiele für die zu ver-wendenden aliphatischen gesättigten und cyclo-aliphatischen Dicarbonsäuren oder ihre Derivate sind Phthalsäure oder Phthalsäureanhydrid, Isophthal-Terephthalsäure, Hexa- oder Tetrahy-dorphthalsäure bzw. deren Anhydride, Endome-thylentetrahydrophthalsäure oder deren Anhy-drid, Bernsteinsäure bzw. Bernsteinsäureanhy-drid und Bernsteinsäureester und -chloride, Adipinsäure, Sebacinsäure.
Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6, 2,2-Bis(4-hy-droxycyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.
Weitere Modifikationen sind möglich durch Einbau bis zu 10 Mol-%, bezogen auf die Alkohol-bzw. Säurekomponente, ein-, drei- und vierwertiger Alkohole mit 1-6 C-Atome, wie Methanol, Ethanol, Butanol, Allylalkohol, Benzylalkohol, Cyclohexanol und Tetrahydrofurfurylalkohol, Trimethylpropan, Glycerin und Pentaerythrit sowie von Mono-, Di- und Triallylethern und Benzylethern drei- und mehrwertiger Alkohole mit 3–6 C-Atomen gemäss DE-B-1 024 654, sowie durch Einbau einbasischer Säuren wie Benzoesäure, oder langkettiger ungesättigter Fettsäuren wie Ölsäure, Leinölfettsäure und Ricinenfettsäure.

Die Säurezahlen der Polyester sollen zwischen 1 und 100, vorzugsweise zwischen 20 und 70, die OH-Zahlen zwischen 10 und 150, vorzugsweise zwischen 20 und 100, und die als Zahlenmittel gemessenen Molekulargewichte $\bar{M}_n$ zwischen ca. 500 und 5000, vorzugsweise zwischen ca. 1000 und 3000 liegen (dampfdruckosmometrisch gemessen in Dioxan und Aceton; bei differierenden Werten wird der niedrigere als der korrekte angesehen).

Die ungesättigten Polyester und ihre Herstellung wurden im einzelnen beispielsweise in den DE-B-1 024 654, 1 054 620 und 2 221 335 beschrieben.

VIII. Weiterhin geeignet sind Massen, die durch Polymerisation von geeignet substituierten ethylenisch, bevorzugt vinylisch insbesondere acrylisch und/oder methacrylisch ungesättigten Verbindungen erhalten werden, dargestellt, dass die so erhaltenen Polymeren an ihren Substituenten in einem weiteren Verfahren zur Umsetzung mit ethylenischen, bevorzugt vinylischen und insbesondere acrylischen und/oder methacrylischen Derivaten zur Umsetzung gebracht werden. Die so erhaltenen ungesättigten Copolymerisate und ihre Herstellung wurden im einzelnen beispielsweise in der DE-A-1 964 547 beschrieben.

Die unter VI. und VIII. angeführten Verbindungen können gewünschtenfalls bei vorhandener OH-Zahl gemäss III. urethanisiert werden.

Selbstverständlich können auch Mischungen der unter I. bis VIII. genannten Verbindungen verwendet werden. Die erfindungsgemäss angewandte Haftschicht kann auch aus radikalisch vernetzbaren Monomeren bestehen, insbesondere solchen, die einen ausreichend hohen Siedepunkt von etwa 100°C oder höher besitzen.

Als vernetzbare Masse für die Haftschicht sind in diesem Zusammenhang Gemische radikalisch vernetzbarer Monomerer mit den weiter oben angegebenen Oligo- oder Polymeren und/oder nicht radikalisch härtbaren Thermoplasten als Filmbildner geeignet.

Beispiele für geeignete Monomere, die sich für diesen Zweck eignen, sind:

1) Ester der Acryl- oder Methacrylsäure mit aliphatischen $C_1$-$C_8$, cycloaliphatischen $C_5$-$C_6$, araliphatischen $C_7$-$C_8$ Monoalkoholen, beispielsweise Methylacrylat, Ethylacrylat, n-Propylacrylat, n-Butylacrylat, Methylhexylacrylat, 2-Ethylacrylat und die entsprechenden Methacrylsäureester; Cyclopentylacrylat, Cyclohexylacrylat oder die entsprechenden Methacrylsäureester; Benzylacrylat, $\beta$-Phenylethylacrylat und entsprechende Methacrylsäureester;

2) Hydroxyalkylester der Acryl- oder Methacrylsäure mit 2 bis 4 C-Atomen in der Alkoholkomponente, wie Hydroxyethylacrylat, 2-Hydroxypropylacrylat, 3-Hydroxypropylacrylat, 2-Hydroxybutylacrylat, 4-Hydroxybutylacrylat oder entsprechende Methacrylsäureester;

3) Di- und Polyacrylate sowie Di- und Polymethacrylate von Diolen und Polyolen mit 3 bis 4 Hydroxylgruppen, die gegebenenfalls alkoxyliert, vorzugsweise ethoxyliert oder propoxyliert sein können, wie Ethylenglykoldiacrylat, Propandiol-1,3-diacrylat, Butandiol-1,4-diacrylat, Hexandiol-1,6-diacrylat, Trimethylolpropantriacrylat, Pentaerythrittri- und -tetraacrylat sowie entsprechende Methacrylate, ferner Di(meth)acrylate von Polyetherglykolen des Glykols, Propandiol-1,3, Butandiol-1,4;

4) aromatische Vinyl- und Divinylverbindungen, wie Styrol, Methylstyrol, Divinylbenzal;

5) N-Methylolacrylamid oder N-Methylolmethacrylamid sowie entsprechende N-Methylolalkylether mit 1 bis 4 C-Atomen in der Alkylethergruppe bzw. entsprechende N-Methylolallylether, insbesondere N-Methoxymethyl(meth)acrylamid, N-Butoxymethyl(meth)acrylamid und N-Allyloxymethyl(meth)acrylamid;

6) Vinylalkylether mit 1 bis 4 C-Atomen in der Alkylgruppe, wie Vinylmethylether, Vinylethylether, Vinylpropylether, Vinylbutylether;

7) Trimethylolpropandiallylethermono (meth)acrylat, Vinylpyridin, N-Vinylcarbazol, Triallylphosphat, Triallylisocyanurat, N-Vinylpyrrolidon und andere.

Es können auch Gemische aus einem oder mehreren der vorgenannten Monomeren eingesetzt werden.

Mischungen der genannten Monomeren mit Oligo- oder Polymeren bzw. filmbildenden Thermoplasten können hinsichtlich ihrer Eigenschaften durch das Verhältnis der Einzelkomponenten beeinflusst werden. Dabei enthalten flüssige Mischungen einen relativ hohen Anteil an Monomeren. Werden hochviskose gelartige oder feste radikalisch, härtbare Gemische gewünscht, wird man den Anteil an Monomeren entsprechend gering halten.

Beispiele für geeignete Filmbildner sind:

1. Mischpolyester, nämlich solche, welche hergestellt sind aus dem Reaktionsprodukt eines Polymethylenglykols der Formel $HO(CH_2)_nOH$, in welcher n den Wert von 2 bis 10 besitzt, und (1) Hexahydroterephthalsäure, Sebacinsäure und Terephthalsäure, (2) Terephthalsäure, Isophthalsäure und Sebacinsäure, (3) Terephthalsäure und Sebacinsäure, (4) Terephthalsäure und Isophthalsäure und (5) Gemischen der Mischpolyester, welche aus den erwähnten Glykolen und (i) Terephthalsäure, Isophthalsäure und Sebacinsäure und (ii) Terephthalsäure, Isophthalsäure, Sebacinsäure und Adipinsäure hergestellt sind;

2. Polyamide, wie beispielsweise N-Methoxymethylpolyhexamethylen-adipinsäureamid;

3. Vinylidenchloridmischpolymerisate, z.B. Vinylidenchlorid-Acrylnitril-, Vinylidenchlorid-Methylacrylat- und Vinylidenchlorid-Vinylacetat-Mischpolymerisate;
4. Ethylen-Vinylacetat-Mischpolymerisate;
5. Celluloseether, z.B. Methylcellulose, Ethylcellulose und Benzylcellulose;
6. Polyethylen;
7. synthetische Kautschukarten, z.B. Butadien-Acrylnitril-Mischpolymerisate und Chlor-2-Butadien-1,3-Mischpolymerisate;
8. Celluloseester, z.B. Celluloseacetat, Celluloseacetatsuccinat und Celluloseacetatbutyrat;
9. Polyvinylester, z.B. Polyvinylacetat-Acrylat, Polyvinylacetat-Methacrylat und Polyvinylacetat;
10. Polyacrylat und $\alpha$-Alkylpolyacrylatester, z.B. Polymethylmethacrylat und Polyethylmethacrylat;
11. hochmolekulare Polyethylenoxide oder Polyglykole mit einem durchschnittlichen Molekulargewicht von etwa 4000 bis 1 000 000;
12. Polyvinylchlorid und Vinylchloridmischpolymerisate, z.B. Polyvinylchlorid-Acetat;
13. Polyvinylacetate, z.B. Polyvinylbutyrat, Polyvinylformal;
14. Polyformaldehyde;
15. Polyurethane;
16. Polycarbonate;
17. Polystyrole.

Geeignete Mischungen sind z.B. in den US-A-2 760 863, 3 060 026, 3 261 686 und 3 380 831 beschrieben.

Die Vernetzung der erfindungsgemässen Haftschicht kann mittels energiereicher Strahlung, wie UV-Licht, Elektronen- oder Gammastrahlen, erfolgen. Bei Verwendung von UV-Licht wird in Gegenwart von Fotoinitiatoren belichtet.

Als Photoinitiatoren sind die üblicherweise für diesen Zweck verwendeten Verbindungen geeignet, beispielsweise Benzophenon sowie ganz allgemein aromatische Ketonverbindungen, die sich vom Benzophenon ableiten, wie Alkylbenzophenone, halogenmethylierte Benzophenone gemäss der DE-A-1 949 010, Michlers Keton, Anthron, halogenierte Benzophenone. Ferner eignen sich Benzoin und seine Derivate, etwa gemäss den DE-A-1 769 168, 1 769 853, 1 769 854, 1 807 297, 1 807 301, 1 919 678 und der DE-B-1 694 149. Ebenfalls wirksame Photoinitiatoren stellen Anthrachinon und zahlreiche seiner Derivate dar, beispielsweise $\beta$-Methylanthrachinon, tert.-Butylanthrachinon und Anthrachinoncarbonsäureester, ebenso Oximester gemäss der DE-A-1 795 089. Weiter geeignet sind Phenylglyoxylsäureester gemäss De-A-2 825 955.

Besonders geeignete Photoinitiatoren sind Benzyldimethylketal, Benzoinisopropylether und das System Benzophenon/Amin, entsprechend US-A-3 759 807.

Die für das jeweilige photovernetzbare System am besten geeigneten Fotoinitiatoren können durch wenige einfache Handversuche ermittelt werden.

Die Vernetzung der erfindungsgemässen Haftschicht kann auch mittels zugesetzter Polymerisationsinitiatoren, die thermisch oder durch Beschleuniger aktiviert, eine radikalische d.i. durch sogenannte externe Radikalbildner Polymerisation auslösen, erfolgen. Übliche Polymerisationsinitiatoren sind beispielsweise in Wagner/Sax, Lackkunstharze, Kap. ungesättigte Polyesterharze, 5. Auflage, Carl Hauser Verlag, Stuttgart 1971 oder in Ullmanns Enzyklopädie der technischen Chemie, Band 13, 3. Auflage, in Houben-Weyl, Methoden der organischen Chemie, Georg Thieme Verlag, Stuttgart 1961, Band 14/1, S. 216 ff. und 229 ff. oder in Brandrup/Immergut, Polymer Handbook, John Wiley + Sons, New York, 2. Auflage 1975, beschrieben.

Beispiele üblicher Polymerisationsinitiatoren sind: Acylperoxide wie Diacetylperoxid, Dibenzoylperoxid, Di-p-dichlorbenzoylperoxid, Benzoylperoxid, Peroxidester wie tert.-Butylperoxidacetat, tert.-Butylperoxidbenzoat, tert.-Butyleroctoat, Dicyclohexylperoxidcarbonat, 2,5-Dimethylhexan-2,5-diperoctoat, Alkylperoxide wie Bis-(tert.-butylperoxibutan), Dicumylperoxid, tert.-Butylcumylperoxid, tert.-Butylperoxid, Lauroylperoxid, Hydroperoxide wie Cumolhydroperoxid, tert.-Butylhydroperoxid, Cyclohexanonhydroperoxid, Methylethylketonhydroperoxid, Methylisobutylketonhydroperoxid, Perketale wie 1,1-Di-tert.-butylperoxi-3,3,5-trimethylcyclohexan, Ketonperoxid wie Cyclohexanonperoxid, Ethylmethylketonperoxid, Azoverbindungen wie Azoisobutyrodinitril und Acetylacetonperoxid.

Weiterhin geeignet sind nicht peroxidische Polymerisationsinitiatoren vom Typ C-C-Spalter ($\alpha,\alpha,\alpha',\alpha'$-Tetra-substituierte Ethane) wie sie in den DE-B-1 216 877, 1 219 224, den DE-A-2 615 039, 2 164 482, 2 625 027, 2 131 623, 2 656 782, 2 632 294, 2 853 938, 2 909 951 sowie in Kunststoffe 68 (1978) S. 593 ff und Kunststoffe 66 (1976) S. 688 ff, beschrieben sind.

Namentlich seien erwähnt: Acetophenonpinakol, Benzpinakol, 3,4-Diphenyl-3,4-dimethylhexan, 1,2-Dichlortetraphenylethan, Tetraphenylbernsteinsäure-dinitril, 1,2-Dicyano-1,2-diphenylbernsteinsäure-dinitril, 1,2-Dicyano-1,2-diphenylbernsteinsäureester, Benzpinakolsilyl, ether, Benzpinakolalkylether.

Die radikalischen Polymerisationsinitiatoren können allein oder in Gemischen eingesetzt werden.

Besonders bevorzugt sind Benzpinakolsilylether gemäss der DE-A-2 632 294.

Die für das jeweilige vernetzbare System qualitativ und quantitativ am besten geeigneten Polymerisationsinitiatoren bzw. deren Gemischen können durch wenige einfache Handversuche ermittelt werden.

Werden beispielsweise Haftschichten mit hoher Lagerstabilität angestrebt, so sind Polymerisationsinitiatoren zu bevorzugen, die eine genügend hohe Anspringtemperatur aufweisen. Ist dagegen eine Vernetzung bei relativ geringer bzw. Umgebungstemperatur gewünscht, so sind Polymerisationsinitiatoren mit geringerer Anspringtemperatur zu bevorzugen.

Unter Anspringtemperatur ist hierbei die Temperatur zu verstehen, auf die die mit Polymerisationsinitiator versehene erfindungsgemässe Haftschichtmasse zu erwärmen ist, um einen gezielten Zerfall des Polymerisationsinitiators zum Zwecke der Vernetzung der Haftschichtmasse auszulösen.

Zur Steigerung der Reaktivität kann es vorteilhaft sein, bestimmte Beschleuniger wie beispielsweise Kobalt oder Vanadiumnaphthenate bzw. -octoate, tert. Amine, Amide, Amidine oder auch Sulfinsäure, Mercaptane und Arylphosphinsäureester mit zu verwenden. Derartige Beschleuniger sind beispielsweise in Wagner/Sarx Lackkunstharze, 5. Auflage, Carl Hauser Verlag München 1971, Kap. Ungesättigte Polyesterharze und der DE-A-2 650 173 beschrieben.

Um einer vorzeitigen Aktivität der Polymerisationsinitiatoren gegebenenfalls in Verbindung mit Beschleunigern vorzubeugen, kann es vorteilhaft sein, den Polymerisationsinitiator und/oder den Beschleuniger in mikroverkapselter Form den erfindungsgemässen Haftschichtmassen zuzugeben.

Um die radikalisch vernetzbaren polymerisierbaren Verbindungen der Erfindung vor unerwünschter vorzeitiger Polymerisation zu bewahren, empfiehlt es sich, bereits bei der Herstellung 0,001 bis 0,1 Gew.-%, bezogen auf die Gesamtmischung Polymerisationsinhibitoren oder Antioxydantien zuzusetzen.

Geeignete Hilfsmittel dieser Art sind beispielsweise Phenole und Phenolderivate, vorzugsweise sterisch gehinderte Phenole, die in beiden o-Stellungen zur phenolischen Hydroxygruppe Alkylsubstituenten mit 1 bis 6 C-Atomen enthalten, Amine, vorzugsweise sekundäre Acrylamine und ihre Derivate, Chinone, Kupfer-I-Salze organischer Säuren oder Anlagerungsverbindungen von Kupfer(I)halogeniden an Phosphite. Namentlich seien genannt: 4,4'-Bis-(2,6-di-tert.-butylphenol), 1,3,5-Trimethyl-2,4,6-tris-(3,5-di-tert.-butyl-4-hydroxy-benzyl)-benzol, 4,4'-Butyliden-bis-(6-tert.-butyl-m-kresol), 3,5-Di-tert.-butyl-4-hydroxybenzyl-phosphonsäurediethylester, N,N'-Bis-($\beta$-naphthyl)-p-phenylendiamin, N,N'-Bis-(1-methylheptyl)-p-phenylendiamin, Phenyl-$\beta$-naphthylamin, 4,4'-Bis-($\alpha,\alpha$-dimethylbenzyl)-diphenylamin, 1,3,5-Tris-(3,5-di-tert.-butyl-4-hydroxy-hydrocinnamoyl)-hexahydro-s-triazin, Hydrochinon, p-Benzochinon, 2,5-Di-tert.-butylchinon, Toluhydrochinon, p-tert.-Butylbenzcatechin, 3-Methylbenzcatechin, 4-Ethylbenzcatechin, Chloranil, Naphthochinon, Kupfernaphthenat, Kupferoctoat, Cu(I)Cl/Triphenylphosphit, Cu(I)Cl/Trimethylphosphit, CU(I)C1 Trischlorethyl-phosphit, Cu(I)Cl/Tripropylphosphit, p-Nitrosodimethylanilin.

Weitere geeignete Stabilisatoren sind in «Methoden der organischen Chemie» (Houben-Weyl), 4. Auflage, Band XIV/1, S. 433-452, 756, Georg Thieme Verlag, Stuttgart, 1961, beschrieben. Sehr gut geeignet ist z.B. p-Benzochinon und/oder Hydrochinonmonomethylether in einer Konzentration von 0,001 bis 0,05 Gew.%, bezogen auf Gesamtmischung.

Als Folienmaterialien eignen sich z.B. Polyolefine wie Polyethylen, Celluloseester, Polyvinalacetat, Polypropylen, Polystyrol, Polyvinylchlorid, Polyvinylidenchlorid, Polyvinylfluorid, Polytetrahalogenethylen, Polycarbonat, insbesondere auf Basis von Bisphenol A, Polyester, insbesondere auf Basis von Polyethylen- und Polybutylenterephthalat, Polyamid, z.B. Polyamid-6 oder Polyamid-66.

Natürlich können auch sogenannte Verbundfolien aus Einzelfolien gleicher und unterschiedlicher chemischer Zusammensetzung verwendet werden. Als Beispiele seien genannt:
Polyethylen/Polyamide, Polypropylen/Polyamide oder Polyolefinfolien mit anderen Folienmaterialien wie Polyestern, z.B. Polyethylenterephthalat.

Geeignete Folien und Verbundfolien werden in Ullmanns Encyklopädie der technischen Chemie, 4. Auflage, 11. Band, Seiten 673 ff. beschrieben.

Die Dicke der erfindungsgemäss verwendeten Folien richtet sich nach der gewünschten Steifigkeit des Laminates. Im allgemeinen werden Gesamtdicken zwischen 10 und 250 µ ausreichen.

Die zur Aufnahme der radikalisch vernetzbaren Masse bestimmte Oberfläche der Folie kann vor der Beschichtung zur Verbesserung der Bindung zwischen Folie und radikalisch härtbarer Masse einer Vorbehandlung unterworfen werden, die einen gleichmässigen Auftrag der Masse gewährleistet und deren Haftfestigkeit erhöht. Gute Ergebnisse erhält man z.B. bei Polyolefinen mit einer üblichen Coronabehandlung.

Es ist selbstverständlich auch möglich, die Haftung der radikalisch vernetzbaren Masse auf der Trägerfolie durch andere Massnahmen zu unterstützen, so z.B. durch Aufbringen einer geeigneten Substrierschicht.

Das Auftragen der radikalisch vernetzbaren Masse auf die Folie kann mittels der in der Lackindustrie üblichen Methoden wie z.B. Sprühen, Walzen, Rakeln, Drucken, Tauchen, Schleudern, Fluten, Streichen, Pinseln usw. erfolgen.

Die Trockenschichtdicke der Haftschicht richtet sich nach den gewünschten Anforderungen und der Haftfähigkeit der radikalisch vernetzbaren Masse. Im allgemeinen wird man mit 2 bis 50 µ auskommen.

Der für das Verfahren der Erfindung verwendete Informationsträger wird in der Regel aus Papier bestehen, das in bekannter Weise bedruckt, geprägt, beschrieben oder mit Hilfe anderer Mittel mit den gewünschten Informationen versehen worden ist. Als Informationsträger können auch fotografische Papiere oder Filme verwendet werden, die schwarz-weisse oder colorfotografische Aufzeichnungen, Bild- und/oder Zeichen und/oder andere Informationen oder andere Identifikationsmerkmale enthalten. Der Schichtträger solcher fotografischer Informationsträger kann aus den üblichen in der technischen oder Bild-Fotografie verwendeten Materialien bestehen. Als Beispiele seien genannt: Papiere, mit Reflexionsschichten versehene Papiere, polyolefinkaschierte Papiere, die üblichen Filmunterlagen, z.B. aus

Cellulosetriacetat oder Polyester, gegebenenfalls als pigmentierte, opake Schichtträger. Die fotografischen Emulsions- oder Hilfsschichten solcher Informationsträger haben die in fotografischen Materialien allgemein verwendeten Zusammensetzungen.

Zum Auflaminieren der die radikalisch vernetzbaren Masse tragenden Folie auf die Oberfläche des Informationsträgers wird die Folie bis 200°C, vorzugsweise bis 120°C und besonders bevorzugt auf 50°C–120°C, erwärmt. Die Folie wird dabei gegen die Oberfläche des Informationsträgers gedrückt, so dass ein blasen- und knitterfreies Laminat entsteht. Ein darüber hinaus gehender Aufwand an Druck, ist im allgemeinen nicht erforderlich.

Die Laminierung wird zweckmässigerweise kontinuierlich durch aufeinanderfolgendes Heranführen der einzelnen Informationsträger an die von einer Vorratsrolle ablaufenden Folie durchgeführt. Aus dem dabei entstehenden bandförmigen Laminat können die die Informationsträger enthaltenden Teile anschliessend ausgestanzt werden, wobei die verschweisste Folie abhängig von der Dicke des Informationsträgers in einem Abstand von etwa 1 bis 2 mm vom Rand des Informationsträgers abgetrennt wird. Die Dicke der Informationsträger ist im allgemeinen 50 bis 250 µ. Man erhält so eine allseitig geschlossene Umhüllung des Informationsträgers, die eine nachträgliche Kantenverschweissung überflüssig macht. Selbstverständlich führt eine diskontinuierliche Laminierung mittels blattförmiger Folienstücke zu den gleichen Ergebnissen.

Die Vernetzung kann je nach der Natur und der Reaktivität der radikalisch vernetzbaren Masse zu verschiedenen Zeitpunkten, im allgemeinen aber nach der Laminierung, durchgeführt werden. In Einzelfällen kann es vorteilhaft sein, vor der Laminierung eine Vernetzung herbeizuführen.

Die Vernetzungsbedingungen der erfindungsgemässen Haftschichten sind von der Reaktivität der radikalisch vernetzbaren Masse, den verwendeten Polymerisationsinitiatoren und gegebenenfalls den Beschleunigern abhängig.

Für die Bestrahlung des zu vernetzenden Laminates eignen sich die in der Reproduktionstechnik gebräuchlichen Lichtquellen, deren Emission im Bereich von 2500 bis 5000 Å, vorzugsweise 3000 bis 4000 Å liegt. Beispiele für geeignete Lichtquellen sind Kohlenbogenlampen, Xenonlampen, UV-Fluoreszenzlampen, Quecksilberniederdrucklampen, Quecksilberhochdrucklampen, die neben sichtbarem Licht einen für die Polymerisation besonders wirksamen Anteil an ultraviolettem Licht liefern. Die Belichtungszeit richtet sich nach der Art der verwendeten Lichtquelle.

Die Bestrahlung kann bei Raumtemperatur erfolgen, sie kann aber auch bei erhöhten Temperaturen durchgeführt werden. Besonders hohe Haftfestigkeiten werden erzielt, wenn das Laminat vor der Bestrahlung auf eine Oberflächentemperatur von 50 bis 150°C, vorzugsweise 70 bis 120°C, gebracht wird.

Im allgemeinen ist es zweckmässig, die polymerisierbare Masse und das Initiatorsystem so aufeinander abzustimmen, dass die Anspringtemperatur im Bereich von 50–200°C, insbesondere im Bereich von 70–120°C, liegt (Heisshärtung).

Die Vernetzung der erfindungsgemässen Haftschichtmasse erfolgt hierbei im allgemeinen durch Erwärmen auf eine Temperatur, die gleich oder grösser ist als die Anspringtemperatur des Polymerisationsinitiators. Dementsprechend ist bei Verwendung von Polymerisationsinitiatorsystemen, die bei Umgebungstemperatur (Kalthärtung) eine Polymerisation der Haftschichtmasse einleiten, eine Erwärmung der Haftschichtmasse im allgemeinen nicht notwendig. Für den Fall, dass Polymerisationsinitiatorsysteme in mikroverkapselter Form verwandt werden, erfolgt die Aktivierung des Polymerisationsinitiatorsystems durch mechanische Zerstörung der Kapseln, z.B. während des Laminierungsvorgangs. Je nach Natur des Polymerisationsinitiators kann die Erwärmung zum Zwecke der Vernetzung bei dieser Ausführung der erfindungsgemässen Haftschichtmasse von Vorteil sein.

Für die Erwärmung bei der Heissvernetzung des in erfindungsgemässer Weise hergestellten Laminates eignen sich Wärmequellen wie z.B. Infrarotdunkelstrahler, Infrarothellstrahler, Infrarotkopierstrahler, Mikrowellenstrahler, Warmluftgebläse, Heizwalzen, Heizplatten oder ähnliche wärmeabgebende Quellen. Ferner geeignet sind Kohlebogenlampen, Quecksilberniederdrucklampen und Quecksilberhochdrucklampen, die neben einem Anteil von UV-Licht und sichtbarem Licht thermische Strahlung abgeben.

Das Verfahren der Erfindung eignet sich in hervorragender Weise zur Herstellung fälschungssicherer, mit Kunststoff beschichteter Karten, wie sie z.B. von Banken, Ölgesellschaften, Fluglinien oder Einzelhandelsgeschäften als Kreditkarten ausgegeben werden, die aber auch als Betriebsausweise, Wählerkarten, Sozialversicherungskarten oder dergleichen Identifizierungskarten, verwendet werden können. Die nach dem erfindungsgemässen Verfahren hergestellte Laminierung ist mit dem umhüllten Informationsträger untrennbar verbunden und verhindert so jeden Versuch einer nachträglichen Änderung des Informationsgehaltes des Trägers. Die einmal auflaminierte Folie lässt sich ohne völlige Zerstörung des Informationsträgers nicht mehr entfernen.

Die nachfolgenden Beispiele sollen das Verfahren der Erfindung weiter erläutern.

Vernetzbare Masse 1

Es wird ein urethangruppenhaltiges Acrylat hergestellt durch Umsetzung von 222 g Isophorondiisocyanat, 116 g Hydroxyethylacrylat und 1050 g eines Polyesterdiols mit einer OH-Zahl von 56, welches durch Schmelzkondensation von Adipinsäure und Ethylenglykol erhalten wurde.

Nach Vorlegen der gesamten Isocyanatmenge, 0,2 g Zinnoctoat und 0,15 g Di-tert.-butylhydrochinon wird unter Überleiten von trockener Luft das Hydroxyethylacrylat in der Weise zugetropft, dass die Temperatur von 65°C nicht überschritten wird. Nach Erreichen eines NCO-Wertes von ca. 12 Gew.% wird das Polyesterdiol zugegeben und bei 60°C bis zu einem NCO-Wert von 0,1 Gew.% gerührt. Es resultiert ein geruchsfreies, farbloses, viskoses Harz.

Vernetzbare Masse 2

75 g der Masse entsprechend Beispiel 1 werden mit 25 g tetraoxyliertem Trimethylolpropan-trisacrylat vermischt.

Vernetzbare Masse 3

Ein Polyesteracrylat wird erhalten, indem ein durch Schmelzkondensation hergestellter Polyester aceotrop mit Acrylsäure verestert wird.

166 g Phthalsäure, 292 g Adipinsäure, 275 g Trimethylolpropan und 127 g Ethylenglykol werden unter Überleiten eines Stickstoffstromes langsam auf 180 bis 220°C erhitzt. Nach Erreichen einer Säurezahl von 8 (mg KOH/pro g Substanz) wird der Ansatz abgekühlt, 460 g Toluol, 245 g Acrylsäure, 10 g p-Toluolsulfonsäure, 1 g p-Methoxyphenol und 1,5 g Di-tert.-butylhydrochinon zugesetzt. Anschliessend wird unter Durchleiten von Luft Wasser azeotrop abgeschieden. Nach Erreichen einer Säurezahl <15 wird das Lösungsmittel im Vakuum abdestilliert und der Rückstand eine Stunde unter Durchleiten von Luft bei ca. 10 Torr und 80°C desorbiert. Es resultiert ein farbloses und geruchfreies Harz.

Vernetzbare Masse 4

75 g der Haftschichtmasse nach Beispiel 3 werden mit 25 g Hexandiolbisacrylat vermischt.

Vernetzbare Masse 5

Es wird eine Lösung von 70 g tetraethoxyliertem Trimethylolpropan-trisacrylat und 30 g eines Polyvinylacetats (MG ber. 370 000) hergestellt.

Vernetzbare Masse 6

Ein ungesättigter Polyester wird bei 160–180°C durch Schmelzkondensation von 2320 g Fumarsäure, 4519 g Propylenglykol, 1440 g Diethylenglykol, 940 g Trimethylolpropandiallylether sowie 430 g Diethylenglykolmonobutylether in üblicher Weise hergestellt. Es resultiert ein hochviskoses, geruchfreies Harz.

Vernetzbare Masse 7

65 g der Haftschichtmasse nach Beispiel 6 werden mit 35 g Styrol vermischt.

Beispiel 1

Je 100 g der radikalisch vernetzbare Massen 1–7 werden mit 5 g Benzoylperoxid sowie 50 g Ethylacetat vermischt. Die so erhaltenen Lösungen werden mit einem drahtumwickelten Metallstab auf eine Polyethylenfolie, die zuvor einer Coronaentladung unterworfen wurde, aufgetragen. Nach Ablüften des Lösungsmittels resultiert eine 15 bis 20 µm dicke Schicht.

Die so erhaltenen Folien werden in einem Falle einseitig auf ein Dokument aus Kunstdruckpapier, im anderen Falle beidseitig auf ein mit einer photographischen Schicht, die eine Aufzeichnung trägt, versehenes Papierdokument mittels eines handelsüblichen Laminators unter Anwendung einer Walzentemperatur von 115°C auflaminiert.

Die Laminate werden anschliessend zwischen zwei auf 120°C vorgewärmte Metallplatten gelegt und bei 120°C in einer Wärmevorrichtung gelagert. Nach einer Verweilzeit von 10 Minuten werden die Laminate abgekühlt. Die Prüfung ergibt, dass alle Laminate einen guten Verbund aufweisen. Der Versuch, die Laminate mechanisch oder thermisch zu trennen, führt stets zu einer Zerstörung des Informationsträgers.

Beispiel 2

Je 100 g der vernetzbaren Massen 1 bis 5 werden mit 1,5 g Benzildimethylketal und 4 g Benzophenon sowie 50 g Ethylacetat vermischt. Danach wird wie in Beispiel 1 angegeben weitergearbeitet.

Die Laminierung führt man bei einer Walzentemperatur von 90°C aus.

Die Laminate werden anschliessend auf einem regelbaren Transportband unter einem UV-Strahler (80 Watt/cm im Abstand von 8 cm; z.B. ein Hanovia-Strahler) vernetzt. Die Vernetzung wird für die das Dokument aus Kunststoffpapier enthaltende Probe unter den in der folgenden Tabelle 1 angegebenen Bedingungen durchgeführt, für die das Photopapier enthaltende Probe gelten die in Tabelle 2 angegebenen Bedingungen.

Tabelle 1

| Vernetzbare Masse | Vernetzungsbedingungen |
|---|---|
| 1 | 4 m/min |
| 2 | 4 m/min |
| 3 | 2 m/min |
| 4 | 2 m/min |
| 5 | 3 m/min |

Tabelle 2

| Vernetzbare Masse | Vernetzungsbedingungen |
|---|---|
| 1 | 2 m/min |
| 2 | 2 m/min |
| 3 | 0,5 m/min |
| 4 | 0,5 m/min |
| 5 | 1 m/min |

Der Versuch, das Laminat mechanisch oder thermisch zu trennen, führt stets zu einer Zerstörung des Informationsträgers (Inletts).

Vernetzbare Masse 8

150 g Bisphenol-A-bisglycidylether (Epoxiäquivalent 190) werden mit 1,9 g Thiodiglykol, 0,25 g p-Methoxyphenol und 72 g Acrylsäure versetzt und bei einer Temperatur von 70°C unter Überleiten von trockener Luft solange gerührt, bis eine Säurezahl <1 (mg KOH/pro g Substanz) erreicht ist. Man erhält ein glasklares, viskoses Harz.

## Vernetzbare Masse 9

75 g der radikalisch vernetzbaren Masse 8 werden mit 25 g eines tetraethoxylierten Trimethylolpropan-trisacrylates abgemischt.

## Vernetzbare Masse 10

380 g Bisphenol-A-bisglycidylether (Epoxiäquivalent 190) werden mit 3,8 g Thodiglykol, 0,25 g p-Methoxyphenol und 144 g Acrylsäure versetzt und bei einer Temperatur von 70°C unter Überleiten von trockener Luft solange gerührt, bis eine Säurezahl <1 (mg KOH/pro g Substanz) erreicht ist. Anschliessend wird der Ansatz abgekühlt, mit 330 g Dichlormethan und 1 g Zinnoctoat versetzt und bei 40°C werden 84 g Hexamethylendiisocyanat in der Weise zugetropft, das eine Temperatur von 40°C nicht überschritten wird. Man rührt solange, bis der NCO-Wert 0,1 Gew.% beträgt.

## Vernetzbare Masse 11

Das Herstellungsverfahren der radikalisch vernetzbaren Masse 10 wird wiederholt mit dem Unterschied, dass 110 g Hexamethylendiisocyanat zugesetzt werden.

## Vernetzbare Masse 12

Die Herstellung der radikalisch vernetzbaren Masse 10 wird wiederholt mit dem Unterschied, dass 126 g Hexamethylendiisocyanat zugesetzt werden.

## Vernetzbare Masse 13

344 g Hexahydrophthalsäurediglykcidester (Epoxiäquivalent 172) werden mit 3,4 g Thiodiglykol, 0,25 g p-Methoxyphenol und 144 g Acrylsäure versetzt und bei einer Temperatur von 70°C unter Überleiten von trockener Luft solange gerührt bis eine Säurezahl <1 (mg KOH/pro g Substanz) erreicht ist. Das auf Raumtemperatur gekühlte Reaktionsgemisch wird mit 350 g Dichlormethan und 1 g Zinnoctoat versetzt, worauf bei 40°C tropfenweise 158 g eines Trisisocyanates, welches durch Umsetzung von 3 Mol Hexamethylendiisocyanat und 1 Mol Wasser erhalten worden ist, eingebracht werden. Anschliessend wird bis zum Erreichen eines NCO-Wertes von 0,1 Gew.% gerührt.

## Vernetzbare Masse 14

Die Herstellung der radikalisch vernetzbaren Masse 13 wird wiederholt mit dem Unterschied, dass 118 g eines Umsatzproduktes aus 2 Mol Toluylendiisocyanat und 1 Mol Ethylenglykol verwendet werden.

## Vernetzbare Masse 15

75 g der radikalisch vernetzbaren Masse 13 werden mit 25 g tetraethoxyliertem Trimethylolpropan-trisacrylat vermischt.

## Vernetzbare Masse 16

70 g der radikalisch härtbaren Masse 13 werden mit 30 g der Haftschichtmasse gemäss Beispiel 3 vermischf.

## Vernetzbare Masse 17

190 g Bisphenol-A-bisglycidylether (Epoxiäquivalent 190) werden mit 1,9 g Thiodiglykol, 0,25 g p-Methoxyphenol und 86 g Methacrylsäure versetzt und bei einer Temperatur von 70°C unter Überleiten von trockener Luft solange gerührt, bis eine SZ <1 (KOH/pro g Substanz) erreicht ist. Anschliessend wird der Ansatz abgekühlt, mit 165 g Dichlormethan und 0,5 g Zinnoctoat versetzt und bei 40°C werden 42 g Hexamethylendiisocyanat in der Weise zugetropft, dass die Temperatur von 40°C nicht überschritten wird. Man rührt solange, bis der NCO-Wert 0,1 Gew.-% beträgt.

## Beispiel 3

100 g der vernetzbaren Massen 8 bis 17 werden mit 3 g Benzoylperoxid vermischt. Die so erhaltenen Formulierungen werden auf Polyethylenfolien, die zuvor einer Coronaentladung unterworfen wurden, mittels einer Schleuder (300 U/min) aufgebracht. Die in dieser Weise hergestellten angetrockneten Schichten habe im Falle der vernetzbaren Massen 8 und 9 einen leicht klebrigen Griff, im Falle der vernetzbaren Massen 10 bis 17 erhält man jedoch eine physikalisch trockene Oberfläche. Die beschichteten Folien wurden nun beidseitig auf ein mit Aufzeichnungen versehens photographisches Papier laminiert. Die Laminierung wird in einem handelsüblichen Laminator bei einer Walzentemperatur von 115°C durchgeführt.

Die Laminate werden anschliessend zwischen zwei auf 120°C vorgewärmte Glasplatten gelegt und in einer Wärmevorrichtung bei 120°C gehärtet. Nach einer Verweilzeit von 10 Minuten werden die Laminate abgekühlt. Die Abprüfung ergibt, dass alle Laminate einen guten Verbund aufweisen. Jeder Versuch, die Laminate mechanisch oder thermisch zu trennen, führt zur Zerstörung des Informationsträgers (Inletts).

## Beispiel 4

Es wird wie in Beispiel 3 verfahren, mit der Änderung, dass als Polymerisationsinitiator 3 g eines Benzpinakolsilylether gemäss DE-A-2 632 294 Beispiel 1 verwandt wird. Die Prüfung führt zu dem Ergebnis, dass alle Laminate einen guten Verbund aufweisen. Jeder Versuch, die Laminate mechanisch oder thermisch zu trennen, führt zur Zerstörung des Informationsträgers (Inletts).

## Beispiel 5

Es wird eine Vorrichtung verwendet, die aus einem handelsüblichen Laminator und einer mit 2 Infrarotlampen (250 Watt, Lampentyp Osram Siccalux) bestückten Wärmeeinrichtung besteht, in der die Laminate, unmittelbar nachdem sie die Laminierwalzen des Laminators verlassen haben, beidseitig im Abstand von 5 cm an den Wärmestrahlern vorbeigeführt werden können.

In dieser Vorrichtung wird ein Laminat hergestellt, das als Informationsträger ein mit Informationen versehenes photographisches Papier enthält. Der Informationsträger wird mit einer Polyethylenfolie, die einer Coronaentladung ausgesetzt und danach wie in Beispiel 3 und 4 beschrieben, mit der in der folgenden Tabelle 3 angegebenen härtbaren Masse beschichtet wurde, bei 115°C Walzentemperatur beidseitig laminiert und gehärtet. In Tabelle 3 ist die Anzahl der Durchgänge bei einer Vorschubgeschwindigkeit von 0,5 m/min angegeben, bei der ein fehlerfreier Verbund zwischen Informationsträger und Laminierfolie erhalten wurde.

Tabelle 3

| Vernetzbare Masse | Initiator | Anzahl der Durchläufe |
|---|---|---|
| 9 | Benzoylperoxid | 3–4 |
| 9 | Benzpinakolsilylether gemäss Beispiel 19 | 3 |
| 16 | Benzoylperoxid | 3–4 |
| 16 | Benzpinakolsilylether gemäss Beispiel 19 | 2–3 |

Der Versuch, die Laminate mechanisch, thermisch oder chemisch zu trennen, führt stets zu einer Zerstörung des Informationsträgers (Inletts).

Beispiel 6

Zur Prüfung der Widerstandsfähigkeit gegen eine Lösungsmittelbehandlung der nach Beispiel 5 hergestellten Laminate, werden diese Laminate für jeweils eine Stunde in die Lösungsmittel Chloroform, Hexan, Trichlorethylen, Aceton, 5%ige Schwefelsäure und 5%ige Natronlauge bei 50°C eingetaucht. Bei keiner der Proben wurde eine Beschädigung bzw. ein Öffnen des Verbundes zwischen Laminierfolie und Informationsträger festgestellt.

Beispiel 7

Die Beispiele 3 bis 6 wurden wiederholt mit dem Unterschied, dass anstelle der Polyethylenfolie in einem Falle eine Verbundfolie aus Polyethylen/Polyester (50 mm Polyethylen, 12 mm Polyester) und in einem zweiten Falle eine Verbundfolie aus Polyamid/Polyethylen mit den gleichen Schichtdicken verwendet wurde. Die vernetzbaren Massen wurden, im Anschluss an eine Coronabehandlung, in der vorher beschriebenen Weise auf die Polyethylenschicht der Verbundfolie aufgetragen.

Die Ergebnisse entsprachen den nach den Beispielen 3 bis 5 erhaltenen Ergebnissen. In beiden Fällen erhielt man einen fehlerfreien Verbund. Versuche, den Verbund des Laminats mechanisch, thermisch oder mit chemischen Mitteln zu lösen, führten zur Zerstörung des Informationsträgers bzw. blieben erfolglos.

Beispiel 8

100 g der vernetzbaren Massen 8 bis 16 werden mit 1,5 g Benzildimethylketal und 4 g Benzophenon vermischt. Die so erhaltenen Formulierungen werden auf Polyethylenfolien, die zuvor einer Coronaentladung unterworfen wurden, mittels einer Schleuder (300 U/min) aufgebracht. Die in dieser Weise hergestellten angetrockneten Schichten haben im Falle der vernetzbaren Massen 8 und 9 einen leicht klebrigen Griff, im Falle der vernetzbaren Massen 10 bis 16 erhält man jedoch eine Physikalisch trockene Oberfläche. Die beschichteten Folien wurden nun beidseitig auf ein mit Aufzeichnungen versehenes photographisches Papier laminiert. Die Laminierung wird in einem handelsüblichen Laminator bei einer Walzentemperatur von 70 bis 100°C durchgeführt.

Die einzelnen Laminatproben werden wie folgt beschrieben bestrahlt und geprüft.

Beispiel 8a

Die Laminatproben werden auf einem bezüglich ihrer Geschwindigkeit regelbaren Transportband unter 5 in Serie angeordneten UV-Lampen (35 Watt/cm; Type HPQ der Fa. Philipps) je einmal mit ihrer Vorderseite und mit ihrer Rückseite vorbeigeführt.

Tabelle 4

| Vernetzbare Masse | Bestrahlungsbedingungen in m/min |
|---|---|
| 8 | 2 |
| 9 | 2 |
| 10 | 2,5 |
| 11 | 3 |
| 12 | 3,5 |
| 13 | 3 |
| 14 | 3 |
| 15 | 3,5 |
| 16 | 3,5 |

Beispiel 8b

Die Laminatproben werden unter einer Infrarotlampe (250 Watt, Abstand 5 cm; Lampentyp Osram Siccalux) vorgewärmt. Die Vorwärmzeiten sind in der nachfolgenden Tabelle 5 verzeichnet. Anschliessend bestrahlt man die Proben auf einem bezüglich der Geschwindigkeit regulierbaren Transportband mit einem UV-Strahler (80 Watt/cm) aus einem Abstand von 8 cm und bei einer Bandgeschwindigkeit von 5 m/min. In der Tabelle 5 sind die Anzahl der Durchgänge je Seite des Laminats (Vorder- und Rückseite) angegeben, mit denen ein fehlerfreier und lösungsmittelfester Verbund des Laminats erreicht wurde.

Tabelle 5

| Vernetzbare Masse | Vorwärmzeit in sec | Anzahl der Durchgänge bei 5 m/min |
|---|---|---|
| 8 | 12 | 2 |
| 9 | 12 | 2 |
| 10 | 15 | 2 |
| 11 | 20 | 3 |
| 12 | 23 | 3 |
| 13 | 25 | 3 |
| 14 | 25 | 3 |
| 15 | 20 | 2 |
| 16 | 18 | 2 |

Jeder Versuch, das so hergestellte Laminat mechanisch oder thermisch zu trennen führte zur Zerstörung des Informationsträgers (Inletts). Wird auf die in Tabelle 4 angegebene Vorwärmzeit verzichtet, so ist, um einen fehlerfreien Verbund zu erhalten, die Zahl der Durchgänge zu erhöhen.

Die beiden folgenden Beispiele 8c und 8d machen dies deutlich.

Beispiel 8c

Ein Laminat, enthaltend die vernetzbare Masse 11, wird mit einem Infrarotstrahler auf eine Oberflächentemperatur von 95°C erwärmt und anschliessend beiseitig mit je einer Quecksilberhochdrucklampe (125 Watt) aus einem Abstand von 8 cm bestrahlt. Dabei wird die Zeit bestimmt, die zum Erreichen eines fehlerfreien Verbundes erforderlich ist. Die Ergebnisse sind in der folgenden Tabelle 5 wiedergegeben.

Beispiel 8d

Es wird entsprechend Beispiel 8c verfahren, mit dem Unterschied, dass die Vorwärmung entfällt. Die Ergebnisse zeigt die Tabelle 6.

Tabelle 6

| Beispiel | Bestrahlungszeit in sec |
|---|---|
| 8c | 20 |
| 8d | 190 |

Beide Laminate zeigen nach der Bestrahlung einen fehlerfreien Verbund. Versuche, das Laminat mechanisch oder thermisch zu trennen, führten in jedem Falle zur Zerstörung des Informationsträgers (Inletts).

Beispiel 8e

Es wird eine Vorrichtung verwendet, die aus einem handelsüblichen Laminator und einer mit 2 Quecksilberhochdrucklampen (je 125 Watt) bestückten Belichtungseinrichtung besteht, in der die Laminate, unmittelbar nachdem sie die Laminierwalzen des Laminators verlassen haben, beidseitig aus einem Abstand von 8 cm bestrahlt werden können.

In dieser Vorrichtung wird ein Laminat hergestellt, das als Informationsträger ein mit Informationen versehenes photographisches Papier enthält. Der Informationsträger wird mit einer Polyethylenfolie, die einer Coronaentladung ausgesetzt und danach mit der strahlenhärtbaren Masse 9 beschichtet wurde, bei 100°C Walzentemperatur beidseitig laminiert und bestrahlt. Bei einer Vorschubgeschwindigkeit von 0,5 m/min wird ein fehlerfreier Verbund zwischen Informationsträger und Laminierfolie erhalten, der sich ohne Zerstörung des Informationsträgers weder mechanisch noch thermisch wieder trennen lässt.

Beispiel 8f

Zur Prüfung der Widerstandsfähigkeit gegen eine Lösungsmittelbehandlung des nach Beispiel 8e hergestellten Laminates, wird dieses Laminat für jeweils eine Stunde in die Lösungsmittel Chloroform, Hexan, Trichlorethylen, Aceton, 5%ige Schwefelsäure und 5%ige Natronlauge bei 50°C eingetaucht. Bei keiner der Proben wurde eine Beschädigung bzw. ein Öffnen des Verbundes zwischen Laminierfolie und Informationsträger festgestellt.

Beispiel 8g

Die Beispiele 8a bis 8f wurden wiederholt mit dem Unterschied, dass anstelle der Polyethylenfolie in einem Falle eine Verbundfolie aus Polyethylen/Polyester (50 mm Polyethylen, 12 mm Polyester) und in einem zweiten Falle eine Verbundfolie aus Polyamid/Polyethylen mit den gleichen Schichtdicken verwendet wurde. Die vernetzbaren Massen wurden, im Anschluss an eine Coronabehandlung, in der vorher beschriebenen Weise auf die Polyethylenschicht der Verbundfolie aufgetragen. Die Ergebnisse entsprachen den nach den Beispielen 8a bis 8f erhaltenen Ergebnissen. In beiden Fällen erhielt man einen fehlerfreien Verbund. Versuche, den Verbund des Laminates mechanisch, thermisch oder mit chemischen Mitteln zu lösen, führten zur Zerstörung des Informationsträgers bzw. blieben erfolglos.

**Patentansprüche**

1. Verfahren zur Herstellung fälschungssicherer Dokumente durch ein- oder beidseitiges Laminieren eines Informationsträgers mit Folien, von denen mindestens eine durchsichtig ist, dadurch gekennzeichnet, dass die Folie mit einer Haftschicht aus einer radikalisch vernetzbaren Masse versehen wird und auf eine oder beide Seiten des Informationsträgers so auflaminiert wird, dass die vernetzbare Masse mit dem Informationsträger in Kontakt kommt und dass diese Masse der Haftschicht vernetzt wird und dadurch eine nicht wieder lösbare Verbindung zwischen dem Informationsträger und der Folie herstellt.

2. Verfahren nach Anspruch 1, dadurch gekennzeichnet, dass die Masse der Haftschicht mittels energiereicher Strahlung, mittels durch UV-Licht aktivierbarer Initiatoren oder mittels thermisch oder durch Beschleuniger aktivierbarer Initiatoren vernetzt wird.

3. Verfahren nach den Ansprüchen 1 und 2, gekennzeichnet durch die Verwendung einer vernetzbaren Masse, die eine ethylenisch ungesättigte monomere, oligomere oder polymere Verbindung und gegebenenfalls einen Photoinitiator enthält.

4. Verfahren nach den Ansprüchen 1 und 2, gekennzeichnet durch die Verwendung einer vernetzbaren Masse, die eine ethylenisch ungesättigte monomere, oligomere oder polymere Verbindung und einen Polymerisationsinitiator und gegebenenfalls einen Beschleuniger enthält.

5. Verfahren nach den Ansprüchen 1 bis 4, gekennzeichnet durch die Verwendung einer $\alpha,\beta$ ungesättigte Gruppen enthaltenden monomeren, oligomeren oder polymeren Verbindung.

6. Verfahren nach den Ansprüchen 1 bis 5, gekennzeichnet durch die Verwendung einer Vinylgruppen enthaltenden monomeren, oligomeren oder polymeren Verbindung.

7. Verfahren nach den Ansprüchen 1 bis 6, gekennzeichnet durch die Verwendung einer Acrylat- und/oder Methacrylatgruppen enthaltenden monomeren, oligomeren oder polymeren Verbindung.

8. Verfahren nach den Ansprüchen 1 bis 7, dadurch gekennzeichnet, dass eine ethylenisch ungesättigte oligomere oder polymere Verbindung auf der Basis von

Polyestern,
$\alpha,\beta$-ungesättigten Polyestern,
Polyethern,
Polyepoxiden,
Polyurethanen,
urethanmodifizierten Polyepoxiden,
urethanmodifizierten Polyestern und
urethanmodifizierten Polyethern
ungesättigten Polymeren

verwendet wird.

9. Verfahren nach Anspruch 8, gekennzeichnet durch die Verwendung eines urethanmodifizierten (Poly)epoxy-(meth)acrylats.

10. Verfahren nach den Ansprüchen 1 bis 2, dadurch gekennzeichnet, dass eine vernetzbare Masse verwendet wird, die neben einer ethylenisch ungesättigten monomeren oder oligomeren Verbindung einen polymeren thermoplastischen Filmbildner enthält.

11. Verfahren nach den Ansprüchen 1 bis 9, gekennzeichnet durch die Verwendung einer vernetzbaren Masse die neben der ethylenisch ungesättigten oligomeren oder polymeren Verbindung eine monomere Verbindung mit mindestens einer vinylisch ungesättigten Gruppe enthält.

12. Verfahren nach Anspruch 11, gekennzeichnet durch die zusätzliche Verwendung eines polymeren thermoplastischen Filmbildners.

13. Verfahren nach den Ansprüchen 1, 2 und 4, gekennzeichnet durch die Verwendung eines peroxidischen Polymerisationsinitiators.

14. Verfahren nach den Ansprüchen 1, 2 und 4, gekennzeichnet durch die Verwendung eines nicht peroxidischen Polymerisationsinitiators vom Typ $\alpha,\alpha,\alpha',\alpha'$-tertrasubstituierte Ethane.

15. Verfahren nach den Ansprüchen 13 und 14, gekennzeichnet durch die Verwendung eines Polymerisationsinitiators mit einer Anspringtemperatur im Bereich bis 200°C.

16. Verfahren nach Anspruch 15, gekennzeichnet durch die Verwendung eines Polymerisationsinitiators mit einer Anspringtemperatur im Bereich von 60°C bis 150°C.

17. Verfahren nach den Ansprüchen 14 bis 16, dadurch gekennzeichnet, dass als nicht peroxidischer Polymerisationsinitiator Benzpinakolsilylether bzw. Benzpinakolalkylether verwandt werden.

18. Verfahren nach den Ansprüchen 13 bis 17, dadurch gekennzeichnet, dass der Polymerisationsinitiator in mikroverkapselter Form angewandt wird.

19. Verfahren nach Anspruch 1, dadurch gekennzeichnet, dass die mit einer Haftschicht versehene Folie aus Polyethylen besteht und gegebenenfalls in Form einer Verbundfolie mit anderen Polymerfolien verwendet wird.

20. Verfahren nach Anspruch 19, dadurch gekennzeichnet, dass die Polyethylenfolie vor dem Aufbringen der Haftschicht einer Coronabehandlung ausgesetzt wird.

21. Verfahren nach Anspruch 1, dadurch gekennzeichnet, dass als Informationsträger Papier oder ein mit einer oder mehreren photographischen Schichten versehenes Papier verwendet wird.

22. Verfahren nach Anspruch 1, dadurch gekennzeichnet, dass die Laminierung des Informationsträgers bei einer Temperatur bis 150°C durchgeführt wird.

23. Verfahren nach Anspruch 22, dadurch gekennzeichnet, dass die Laminierung des Informationsträgers bei 70°C bis 120°C durchgeführt wird.

24. Verfahren nach den Ansprüchen 1 und 2, dadurch gekennzeichnet, dass das Laminat zur Vernetzung mit energiereicher oder UV-Strahlung auf eine Temperatur bis 150°C erwärmt wird und das vorgewärmte Laminat bestrahlt wird.

25. Verfahren nach den Ansprüchen 1 und 2, dadurch gekennzeichnet, dass das Laminat bei Verwendung thermisch aktivierbarer Initiatoren auf eine Temperatur, die gleich der oder grösser als die Anspringtemperatur des thermisch aktivierbaren Polymerisationsinitiators ist, erwärmt wird.

## Claims

1. Process for the production of forgery-proof documents by laminating one or both sides of an information carrier with films, at least one of which is transparent, characterised in that the film is provided with an adhesive layer of a composition which can be cross-linked by the free radical mechanism, and is laminated on to one or both sides of the information carrier in such a way that the cross-linkable composition comes into contact with the information carrier and this adhesive layer composition is cross-linked and thus produces an inseparable bond between the information carrier and the film.

2. Process according to Claim 1, characterised in that the adhesive layer composition is cross-linked by means of highénergy radiation, by means of initiators which can be activated by UV light or by means of initiators which can be activated thermally or by accelerators.

3. Process according to Claims 1 and 2, characterised by the use of a cross-linkable composition which contains an ethylenically unsaturated monomeric, oligomeric or polymeric compound and, optionally, a photo-initiator.

4. Process according to Claims 1 and 2, characterised by the use of a cross-linkable composition which contains an ethylenically unsaturated monomeric, oligomeric or polymeric compound and a polymerisation initiator and, optionally, an accelerator.

5. Process according to Claims 1 to 4, characterised by the use of a monomeric, oligomeric or polymeric compound containing $\alpha,\beta$-unsaturated groups.

6. Process according to Claims 1 to 5, characterised by the use of a monomeric, oligomeric or polymeric compound containing vinyl groups.

7. Process according to Claims 1 to 6, characterised by the use of a monomeric, oligomeric or polymeric compound containing acrylate and/or methacrylate groups.

8. Process according to Claims 1 to 7, characterised in that an ethylenically unsaturated oligomeric or polymeric compound based on polyesters, $\alpha,\beta$-unsaturated polyesters, polyethers, polyepoxides, polyurethanes, urethane-modified polyepoxides, urethane-modified polyesters and urethane-modified polyethers, and unsaturated polymers is used.

9. Process according to Claim 8, characterised by the use of a urethane-modified (poly)epoxy(meth)acrylate.

10. Process according to Claims 1 to 2, characterised in that a cross-linkable composition is used which contains a polymeric thermoplastic film-former in addition to an ethylenically unsaturated monomeric or oligomeric compound.

11. Process according to Claims 1 to 9, characterised by the use of a cross-linkable composition which contains a monomeric compound having at least one vinylically unsaturated group in addition to the ethylenically unsaturated oligomeric or polymeric coumpound.

12. Process according to Claim 11, characterised by the additional use of a polymeric thermoplastic film-former.

13. Process according to Claims 1, 2 and 4, characterised by the use of a peroxidic polymerisation initiator.

14. Process according to Claims 1, 2 and 4, characterised by the use of a non-peroxidic polymerisation initiator of the $\alpha,\alpha,\alpha',\alpha'$,-tetrasubstituted ethanes type.

15. Process according to Claims 13 and 14, characterised by the use of a polymerisation initiator having a start temperature in the range of up to 200°C.

16. Process according to Claim 15, characterised by the use of a polymerisation initiator having a start temperature in the range of 60°C to 150°C.

17. Process according to Claims 14 to 16, characterised in that benzpinacol silyl ethers or benzpinacol alkyl ethers are used as the non-peroxidic polymerisation initiator.

18. Process according to Claims 13 to 17, characterised in that the polymerisation initiator is used in a microencapsulated form.

19. Process according to Claim 1, characterised in that the film provided with an adhesive layer consists of polyethylene and is optionally used in the form of a composite film with other polymer films.

20. Process according to Claim 19, characterised in that the polyethylene film is subjected to a corona treatment before the adhesive layer is applied.

21. Process according to Claim 1, characterised in that paper or a paper provided with one or more photographic layers is used as the information carrier.

22. Process according to Claim 1, characterised in that the lamination of the information carrier is carried out at a temperature of up to 150°C.

23. Process according to Claim 22, characterised in that the lamination of the information carrier is carried out at 70°C to 120°C.

24. Process according to Claims 1 and 2, characterised in that for the cross-linking with highenergy radiation or UV radiation the laminate is heated to a temperature of up to 150°C and the pre-heated laminate is irradiated.

25. Process according to Claims 1 and 2, characterised in that when using initiators which can be activated thermally the laminate is heated to a temperature which is equal to or higher than the start temperature of the polymerisation initiator which can be activated thermally.

## Revendications

1. Procédé de fabrication de documents inviolables par lamification, sur une ou les deux faces, d'un support d'informations avec des feuilles dont au moins une est transparente, caractérisé en ce que la feuille est pourvue d'une couche adhésive constituée d'une masse réticulable par voie radicalaire, tandis qu'elle est lamifiée sur une ou les deux faces du support d'informations de telle sorte que la masse réticulable entre en contact avec ce dernier et que cette masse de la couche adhésive soit réticulée, établissant ainsi une liaison désormais inamovible entre le support d'informations et la feuille.

2. Procédé suivant la revendication 1, caractérisé en ce qu'on réticule la masse de la couche adhésive au moyen d'un rayonnement riche en énergie, au moyen d'initiateurs pouvant être activés par la lumière ultraviolette ou au moyen d'initiateurs pouvant être activés thermiquement ou par des accélérateurs.

3. Procédé suivant les revendications 1 et 2, caractérisé en ce qu'on utilise une masse réticulable contenant un composé monomère, oligomère ou polymère à insaturation éthylénique et éventuellement un photo-initiateur.

4. Procédé suivant les revendications 1 et 2, caractérisé en ce qu'on utilise une masse réticulable contenant un composé monomère, oligomère ou polymère à insaturation éthylénique et un initiateur de polymérisation, ainsi qu'éventuellement un accélérateur.

5. Procédé suivant les revendications 1 à 4, caractérisé en ce qu'on utilise un composé monomère, oligomère ou polymère contenant des groupes $\alpha,\beta$-insaturés.

6. Procédé suivant les revendications 1 à 5, caractérisé en ce qu'on utilise un composé monomère, oligomère ou polymère contenant des groupes vinyle.

7. Procédé suivant les revendications 1 à 6, caractérisé en ce qu'on utilise un composé monomère, oligomère ou polymère contenant des groupes acrylate et/ou méthacrylate.

8. Procédé suivant les revendications 1 à 7, caractérisé en ce qu'on utilise un composé oligomère ou polymère à insaturation éthylénique à base:

de polyesters,
de polyesters $\alpha,\beta$-insaturés,
de polyéthers,
de polyépoxydes,
de polyuréthanes,
de polyépoxydes à modification uréthane,
de polyesters à modification uréthane, et
de polyéthers à modification uréthane,
de polymères insaturés.

9. Procédé suivant la revendication 8, caractérisé en ce qu'on utilise un (poly)époxy-(méth)acrylate à modification uréthane.

10. Procédé suivant les revendications 1 et 2, caractérisé en ce qu'on utilise une masse réticulable qui, outre un composé monomère ou oligomère à insaturation éthylénique, contient un agent filmogène thermoplastique polymère.

11. Procédé suivant les revendications 1 à 9, caractérisé en ce qu'on utilise une masse réticulable qui, outre le composé oligomère ou polymère à insaturation éthylénique, contient un composé monomère comportant au moins un groupe à insaturation vinylique.

12. Procédé suivant la revendication 11, caractérisé en ce qu'on utilise, en outre, un agent filmogène thermoplastique polymère.

13. Procédé suivant les revendications 1, 2 et 4, caractérisé en ce qu'on utilise un initiateur de polymérisation peroxydique.

14. Procédé suivant les revendications 1, 2 et 4, caractérisé en ce qu'on utilise un initiateur de polymérisation non peroxydique du type des éthanes $\alpha,\alpha,\alpha',\alpha'$-tétrasubstitués.

15. Procédé suivant les revendications 13 et 14, caractérisé en ce qu'on utilise un initiateur de polymérisation ayant une température de départ allant jusqu'à 200°C.

16. Procédé suivant la revendication 15, caractérisé en ce qu'on utilise un initiateur de polymérisation ayant une température de départ se situant dans l'intervalle allant de 60 à 150°C.

17. Procédé suivant les revendications 14 à 16, caractérisé en ce que, comme initiateur de polymérisation non peroxydique, on utilise des éthers silyliques de benzpinacol ou des éthers alkyliques de benzpinacol.

18. Procédé suivant les revendications 13 à 17, caractérisé en ce que l'initiateur de polymérisation est utilisé sous forme de microcapsule.

19. Procédé suivant la revendication 1, caractérisé en ce que la feuille pourvue d'une couche adhésive est constituée de polyéthylène, tandis qu'on l'utilise éventuellement sous forme d'une feuille composite avec d'autres feuilles polymères.

20. Procédé suivant la revendication 19, caractérisé en ce que, avant l'application de la couche adhésive, la feuille de polyéthylène est exposée à un traitement corona.

21. Procédé suivant la revendication 1, caractérisé en ce que, comme support d'informations, on utilise du papier ou un papier pourvu d'une ou de plusieurs couches photographiques.

22. Procédé suivant la revendication 1, caractérisé en ce que la lamification du support d'informations est effectuée à une température allant jusqu'à 150°C.

23. Procédé suivant la revendication 22, caractérisé en ce que la lamification du support d'informations est effectuée à une température de 70 à 120°C.

24. Procédé suivant les revendications 1 et 2, caractérisé en ce que, pour la réticulation avec un rayonnement riche en énergie ou à l'ultraviolet, on chauffe le lamifié à une température allant jusqu'à 150°C et on irradie le lamifié préchauffé.

25. Procédé suivant les revendications 1 et 2, caractérisé en ce que, lorsqu'on utilise des initiateurs pouvant être activés thermiquement, on chauffe le lamifié à une température qui est égale ou supérieure à la température de départ de l'initiateur de polymérisation pouvant être activé thermiquement.